(19) Europäisches Patentamt
European Patent Office
Office européen des brevets

(11) Veröffentlichungsnummer: **0 001 620**
**B1**

(12) # EUROPÄISCHE PATENTSCHRIFT

(45) Veröffentlichungstag der Patentschrift: **08.04.81**

(51) Int. Cl.³: **C 07 C 103/44,** D 06 M 13/46 // C07C102/04, C07F9/11

(21) Anmeldenummer: **78101139.0**

(22) Anmeldetag: **13.10.78**

(54) **Quaternierte Amin-Amid Kondensationsprodukte und deren Verwendung in ölhaltigen Faserpräparationsmitteln.**

(30) Priorität: **25.10.77 DE 2747723**

(43) Veröffentlichungstag der Anmeldung: **02.05.79 Patentblatt 79/9**

(45) Bekanntmachung des Hinweises auf die Patenterteilung: **08.04.81 Patentblatt 81/14**

(84) Benannte Vertragsstaaten: **DE FR GB NL**

(56) Entgegenhaltungen:
**CH-A-554 447**
**DE-A-2 132 805**
**GB-A-1 104 744**

(73) Patentinhaber: **HOECHST AKTIENGESELLSCHAFT, Postfach 80 03 20, D-6230 Frankfurt/Main 80 (DE)**

(72) Erfinder: **Kleber, Rolf, Dr., Spechtstrasse 15, D-6078 Neu-Isenburg (DE)**
Erfinder: **Wagemann, Wolfgang, Dr., Gartenstrasse 25, D-6238 Hofheim am Taunus (DE)**

**EP 0 001 620 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

# Quaternierte Amin-Amid-Kondensationsprodukte und deren Verwendung in ölhaltigen Faserpräparationsmitteln

In Präparationsmitteln ist es meist notwendig, Antistatika mitzuverwenden um optimale Gleiteigenschaften der präparierten Fasern zu erhalten. Als Antistatika für Präparationsmittel, speziell für Filamentpräparationen, werden eine Reihe von chemisch unterschiedlichen Produkten eingesetzt. Diese sind, nach Rath: Lehrbuch der Textilchemie, S. 342, anion- und kationaktive Produkte, im gewissen Umfang auch nichtionische Polyäthylenoxide und Polyäthylenoxid-Addukte. Eine Klassifizierung wird von Rath (loc. cit. S. 792) gegeben. So werden als Antistatika in Faserpräparationsmitteln Phosphorsäureester, quartäre Ammoniumverbindungen, Fettsäure-imidazolin-Derivate u. a. eingesetzt.

Für die Filamentpräparationen liegt ein Problem darin, daß in den meist auf Mineral- oder Esterölbasis aufgebauten Konzentraten die obenerwähnten Antistatika nur wenig löslich sind. Dieser Problematik versuchen eine Reihe von Präparationsmittelherstellern dadurch auszuweichen, daß sie z. B. Phosphorsäureester als Antistatika einsetzen, die mit organischen Basen neutralisiert sind und dadurch beschränkt öllöslich werden. So beschreibt die US-PS 2 742 379 Alkanolaminsalze von Alkylphosphaten als Antistatika, z. B. im Beispiel I das Diäthanolaminsalz eines $P_2O_5$-Esters von Dodecanol.

Diese Produkte sind zwar begrenzt öllöslich, doch sind die Thermostabilitäten der Alkanolaminsalze nur mäßig, so daß es in der Praxis beim Arbeiten mit diesen Phosphatester-Salzen immer wieder nach Fixier- und Texturiervorgängen zu Vergilbungen auf den Fasern kommt. Sehr gut wirksam als Antistatika sind auch quarternäre Ammoniumverbindungen. Diese Produkte sind aber in den ölhaltigen Filamentpräparationen nicht gerne gesehen, da sie durch ihre hohe Polarität, die auch die hohe Antistatika in der Praxis bewirkt, in den ölhaltigen Konzentraten meist unlöslich sind und auch als quarternäre Ammoniumverbindungen bei hohen Temperaturen vergilben können.

Es wurde nun gefunden, daß man ölhaltige Faserpräparationsmittel mit einem Gehalt an quarternären Ammoniumverbindungen herstellen kann, wenn man als quarternäre Ammoniumverbindungen quaternierte Amin-Amid-Kondensationsprodukte verwendet. Amin-Amid-Kondensationsprodukte, allerdings nur in ihrer nichtquaternierten Form, werden auch in der DE-OS 2 132 805 und in der CH-A 554 447 beschrieben. Sie dienen aber nicht als Faserpräparationsmittel, sondern im ersten Fall zum antistatischen Ausrüsten von Kunststoff-Formkörpern und im zweiten Fall als Reinigungsverstärker in der chemischen Reinigung.

Gegenstand der Erfindung sind somit quaternierte Amin-Amid-Kondensationsprodukte, dadurch gekennzeichnet, daß sie erhalten werden durch Kondensation während 2 bis 6 Stunden bei 130 – 170° C ohne Lösungsmittel von 1 Mol eines Amins der allgemeinen Formel

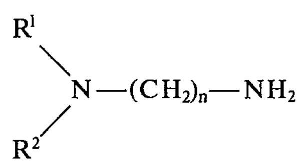

mit 0,8 bis 1,3 Mol einer Carbonsäure der allgemeinen Formel

$$R_4-COOH$$

und anschließende Quaternierung in Gegenwart von Alkalimetallhydroxyd mit einem Trialkylphosphat der allgemeinen Formel

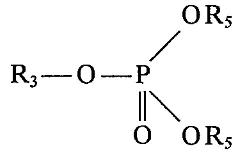

wobei

$R_1$ eine Alkyl- oder Alkenylgruppe mit 7 bis 20 C-Atomen,
$R_2$ eine Alkylgruppe mit 1 bis 20 C-Atomen oder ein Wasserstoffatom,
$R_3$ und $R_5$ gleiche oder verschiedene Alkylgruppen mit 1 bis 4 C-Atomen,
$R_4$ ein Wasserstoffatom oder eine Alkylgruppe mit 1 – 4 C-Atomen und
n = 2 oder 3 bedeuten.

Wenn $R_1$ und $R_2$ beide eine Alkylgruppe darstellen, haben die Endprodukte die Formel

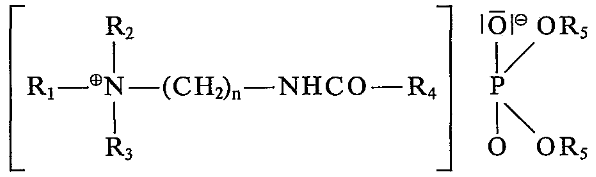

Ist dagegen $R_2$ ein Wasserstoffatom, so erhält man ein Gemisch aus einer Verbindung der obigen Formel und einer Verbindung der Formel

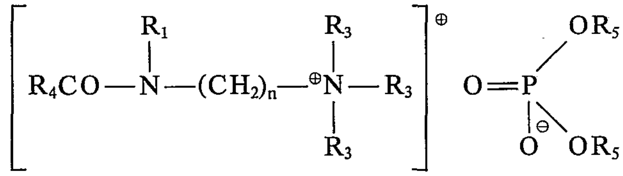

Beide Typen von Verbindungen fallen bei der Synthese etwa in gleichen Mengenanteilen an.

Die Synthese der Amin-Amid-Kondensationsprodukte erfolgt durch Zusammengeben der beiden Ausgangskomponenten und Erhitzen während 2 bis 6 Stunden auf 130–170°C ohne Lösungsmittel, wobei das entstehende Reaktionswasser abdestilliert. Das Molverhältnis der Ausgangskomponenten liegt zwischen 0,8 und 1,3 Mol Säure auf ein Mol Amin, vorzugsweise werden beide Komponenten im gleichen Molverhältnis eingesetzt. Anstelle der freien Carbonsäure kann man auch deren funktionelle Derivate verwenden, wie etwa Anhydride oder Säurechloride. Bevorzugt sind Ameisensäure und Essigsäure. Die anschließende Quaternierung erfolgt in bekannter Weise (US-PS 2 563 506) durch Zugabe von Alkalimetallhydroxid und der erforderlichen Menge an Trialkylphosphat. Das so erhaltene, wasserhaltige Reaktionsprodukt kann direkt den Faserpräparationsmitteln zugegeben werden. Selbstverständlich kann man das quaternierte Amin-Amid-Kondensationsprodukt durch Entfernen des Wassers auch in reiner Form erhalten oder auch durch weitere Zugabe von Wasser noch verdünnen.

Die so erhaltenen quaternären Ammoniumverbindungen sind überraschenderweise sowohl in Mineral- als auch in Esterölen, wie Butyl-stearat, Pentaerythrittetrapelargonat, Hexadecylnonanat u. a. klar löslich und sind gut verträglich mit den aus ölhaltigen Filamentpräparationssystemen hergestellten wäßrigen Emulsionen. Dies ist um so überraschender, als entsprechende quaternierte Amine ohne Amidgruppierung in Mineralölen nur wenig löslich sind. Die beanspruchten Verbindungen sind als quaternäre Ammoniumverbindungen sehr gut antistatisch wirksam und thermostabil beim Erhitzen. Sie können als 100%ige Substanzen, als Weichpasten oder Flüssigkeiten eingesetzt werden. Nach Zugabe von wenig Wasser können flüssige, gieß- und pumpbare Konzentrate hergestellt werden.

Die Produkte verleihen Fasern, in einer Menge von 0,01–3%, vorzugsweise 0,1–0,6%, aufgebracht, eine hervorragende Antistatik. Besonders vorteilhaft ist die Applikation in Mineralöl- und Esteröl-Filamentpräparationssystemen, denen sie in einer Menge von 5–40, vorzugsweise 10–25%, zugemischt, ausreichende Antistatikeigenschaften auf Filamenten aus Polyamid, Polyester, Polyolefinen und Regeneratcellulose verleihen. Auch in Spul- und Batschölen eingesetzt, können die beanspruchten Verbindungen gute Antistatikwerte vermitteln. Die Applikation kann durch Tauchen, Sprühen, Pflatschen über Galetten oder Zahnradpumpen oder Tauchwalzen erfolgen. Die Produkte können bei der Herstellung der Fasern und Filamente, jedoch auch bei der Weiterverarbeitung in Form z. B. sprühbarer Ölschmälzen eingesetzt werden. Die Applikation bei der Herstellung von Fasern kann als Spinn-, Versteck- und auch als Endpräparation erfolgen, wobei die Verbindungen allein oder neben anderen Präparationsbestandteilen, wie nichtionischen Oxäthylaten, Silikonderivaten, Sarkosiden u. a. eingesetzt werden können. Als zu behandelnde Fasern kommen insbesondere solche aus Polyester, Polyamid, Polyacrylnitril, Polyolefine, Regeneratcellulose oder cellulosische Fasern in Betracht.

## Beispiel 1

362 g Talgfettpropylendiamin werden auf 60°C erwärmt. Man läßt unter Rühren 46 g 98%ige Ameisensäure zufließen und erhitzt unter Überleiten von Stickstoff 3 1/2 Stunden auf 150°C. Es destillieren 16,5 g Wasser ab (Säurezahl 5). Man kühlt auf 65°C ab, gibt 140 g 29%ige Natronlauge hinzu und läßt unter kräftigem Rühren 280 g Trimethylphosphat in 60 Minuten zutropfen. Es wird 2 1/2 Stunden bei 60–70°C nachgerührt. Man erhält 800 g Produkt mit einem Wirksubstanz-Gehalt (=WS-Gehalt) von 85%. Das flüssige Produkt kann ohne weiteres Verdünnen eingesetzt werden.

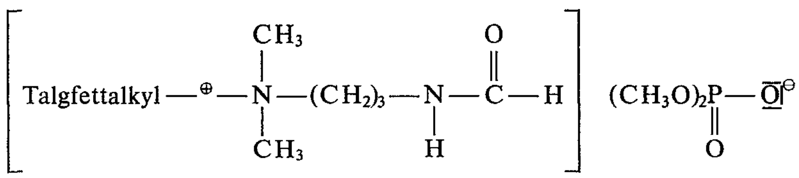

## Beispiel 2

362 g Talgfettpropylendiamin werden auf 60°C erwärmt. Man läßt unter Rühren 60 g Eisessig zufließen und kondensiert unter Überleiten von Stickstoff 4¹/2 Stunden bei 150°C. Es destillieren 16 g Wasser ab (Säurezahl 5). Man kühlt auf 65°C ab, gibt 140 g 29%ige Natronlauge hinzu und läßt unter kräftigem Rühren 280 g Trimethylphosphat in 60 Minuten zutropfen. Nach 2¹/2stündigem Nachrühren bei 60–70°C erhält man 820 g Produkt mit einem WS-Gehalt von 85%. Das Produkt ist flüssig.

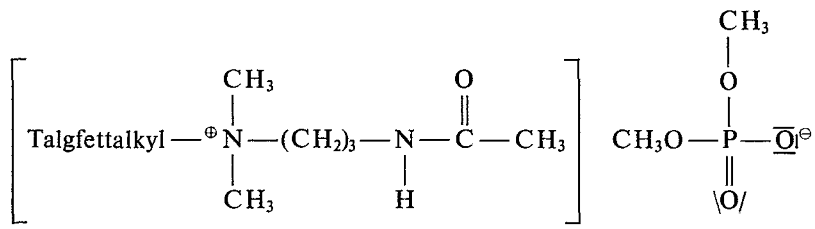

## Beispiel 3

256 g Laurylpropylendiamin werden auf 50°C erwärmt. Man läßt unter Rühren 60 g Eisessig zufließen und erhitzt unter Überleiten von Stickstoff 6 Stunden auf 150°C. Es destillieren 16,5 g Wasser ab (Säurezahl 5). Man kühlt auf 65°C ab, fügt 140 g 29%ige Natronlauge hinzu und läßt unter kräftigem Rühren 280 g Trimethylphosphat zutropfen (60 Minuten). Nach 2¹/2stündigem Nachrühren bei 60–70°C resultieren 720 g Produkt mit einem WS-Gehalt von 85%. Das flüssige Produkt kann direkt weiterverwendet werden.

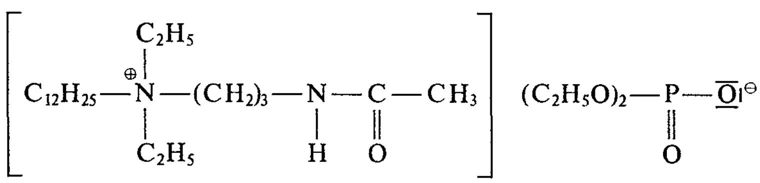

## Beispiel 4

Folgende Öl- und Esterölpräparationen wurden hergestellt:

1) Mineralölsystem I
   50 Gewichtsteile Mineralöl (Viskosität bei 20°C: 32 cP; 62% Paraffine; 38% Naphthene),
   20 Gewichtsteile eines Umsetzungsproduktes aus 1 Mol Cocosfettalkohol und 5 Mol Äthylenoxid,
   20 Gewichtsteile eines Umsetzungsproduktes aus 1 Mol Isotridecylalkohol und 3 Mol Äthylenoxid,
   10 Gewichtsteile eines $POCl_3$-Esters des Umsetzungsprodukts aus 1 Mol Laurylalkohol und 4 Mol Äthylenoxid.

2) Mineralölsystem II
   nach DE-PS 2 326 966, Beispiel 1a.

3) Mineralölsystem III
   nach DE-OS 2 528 734, Beispiel I 3.

4) Esterölsystem
   43 Gewichtsteile Pentaerythrit-tetradecylat,
   57 Gewichtsteile Emulgator, bestehend aus:
   6 Gewichtsteile eines Umsetzungsprodukts aus 1 Mol Oleylalkohol und 5 Mol Äthylenoxid,
   1 Gewichtsteil eines $POCl_3$-Esters des Umsetzungsprodukts aus 1 Mol Oleylalkohol und 8 Mol Äthylenoxid,
   1 Gewichtsteil eines Umsetzungsproduktes aus 1 Mol Rizinusöl und 7,5 Mol Äthylenoxid,
   3 Gewichtsteile eines Umsetzungsprodukts aus 1 Mol Cocosfettsäure und 8 Mol Äthylenoxid,
   1 Gewichtsteil Wasser.

Die vier Ölsysteme wurden mit folgenden quarternären Ammoniumverbindungen versetzt.

a) Talgfettpropylendiamin, mit Dimethylsulfat nach DE-PS 2 335 675, Beispiel 1b (Vergleich),
b) permethyliertes Kondensationsprodukt von 1 Mol Diäthylentriamin mit 1 Mol Stearinsäure nach DE-PS 2 335 675, Beispiel 1a (Vergleich),
c) erfindungsgemäß Beispiel 1,
d) erfindungsgemäß Beispiel 2,
e) erfindungsgemäß Beispiel 3.

Diese quartären Ammoniumverbindungen wurden den obigen Ölsystemen in Mengen von 10 bzw. 20 Gew.-%, bezogen auf die Ölsysteme, zugesetzt.
Bei diesen Präparationssystemen wurden folgende Verträglichkeiten festgestellt:
Die Systeme mit den Produkten a) und b) trennten sich sofort in Phasen ab. Die erfindungsgemäßen Produkte c)–e) lösten sich klar in den vier Ölsystemen. Beim Ansetzen von 10%igen wäßrigen Emulsionen aus den Mineral- und Esterölsystemen mit einem Gehalt an 10 bzw. 20 Gew.-% der erfindungsgemäßen Produkte c)–e) ergaben sich stabile, teilweise klare Systeme, die auch nach mehrtägigem Stehen nicht abtrennten.

## Beispiel 5
## Thermostabilitätstest

a) Produkt nach Beispiel 1 (erfindungsgemäß)
b) Produkt nach Beispiel 2 (erfindungsgemäß)
c) Produkt nach Beispiel 3 (erfindungsgemäß)
d) Produkt nach DE-PS 2 335 675, Beispiel 1a
e) Produkt nach US-PS 2 742 379, Beispiel I (Dodecanol $P_2O_5$-Diäthanolaminsalz)

Die Produkte wurden 1 Stunde bei 220°C gehalten. Es ergaben sich folgende Verluste an Wirksubstanz und folgende Vergilbungen:

| | |
|---|---|
| a: 3,2% JFZ[1]): | 20 |
| b: 2,8%: | 15 |
| c: 4,5%: | 10 |
| d: 19%: | 1 100 |
| e: 45%: | 1 100 |

[1]) JFZ: Vergilbungsskala in Jodfarbzahlen (DIN 6162), gemessen im Anschluß an den Flüchtigkeitstest.

## Beispiel 6

Folgende Antistatikuntersuchungen wurden durchgeführt:

a) Mineralölsystem I (Beispiel 4) + 20% Produkt nach Beispiel 1
b) Mineralölsystem I + 20% Produkt nach Beispiel 2
c) Mineralölsystem I + 20% Produkt nach Beispiel 3
d) Mineralölsystem I + 20% Dodecanol-$P_2O_5$-Diäthanolaminsalz nach US-PS 2 742 379, Beispiel I, als Vergleich

Mit Wasser hergestellte 10%ige Emulsionen dieser klaren Systeme zeigten folgendes Aussehen:

a) bis c) (erfindungsgemäß): opake Mikroemulsionen
d) (Vergleich): milchige Emulsion, die nach 48 Stunden abtrennte

Diese Emulsionen wurden frisch auf PAC-Flocke gebracht (W.S.-Auflage: 0,5%) und bei 80°C getrocknet. Folgende Antistatikwerte wurden gemessen (Meg-Ohmwerte):

| | 22°C<br>65% r.F. | 30% r.F. |
|---|---|---|
| a: | 20 | 40 |
| b: | 100 | 200 |
| c: | 4 | 20 |
| d: (Vergleich) | 250 | $10^6$ |

**Patentansprüche**

1. Quaternierte Amin-Amid-Kondensationsprodukte, dadurch gekennzeichnet, daß sie erhalten werden durch Kondensation während 2 bis 6 Stunden bei 130—170°C ohne Lösungsmittel von 1 Mol eines Amins der allgemeinen Formel

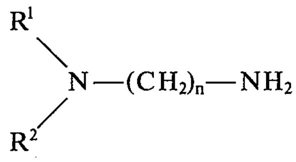

mit 0,8 bis 1,3 Mol einer Carbonsäure der allgemeinen Formel

$$R_4-COOH$$

und anschließende Quaternierung in Gegenwart von Alkalimetallhydroxid mit einem Trialkylphosphat der allgemeinen Formel

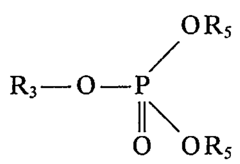

wobei

$R_1$ eine Alkyl- oder Alkenylgruppe mit 7 bis 20 C-Atomen,
$R_2$ eine Alkylgruppe mit 1 bis 20 C-Atomen oder ein Wasserstoffatom,
$R_3$ und $R_5$ gleiche oder verschiedene Alkylgruppen mit 1 bis 4 C-Atomen,
$R_4$ ein Wasserstoffatom oder eine Alkylgruppe mit 1—4 C-Atomen und
n = 2 oder 3 bedeuten.

2. Faserpräparationsmittel, enthaltend ein quaterniertes Amin-Amid-Kondensationsprodukt nach Anspruch 1.

3. Verfahren zur Präparation von Textilfasern, dadurch gekennzeichnet, daß man auf die Fasern ein quaterniertes Amin-Amid-Kondensationsprodukt nach Anspruch 1 aufbringt.

**Claims**

1. Quaternized amine-amide condensation products characterized by being obtained by condensation during 2—6 hours at 130—170°C without a solvent of 1 mole of an amine of the general formula

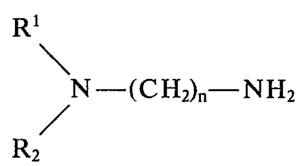

with 0,8 to 1,3 moles of a carboxylic acid of the general formula

$$R_4-COOH$$

and subsequent quaternization in the presence of an alkalimetal hydroxide with a trialkyl phosphate of the general formula

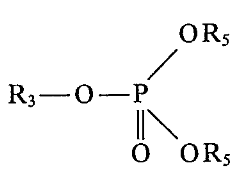

in which formulae

$R_1$ is an alkyl or alkenyl group having from 7 to 20 carbon atoms,
$R_2$ is an alkyl group having from 1 to 20 carbon atoms, or a hydrogen atom,
$R_3$ and $R_5$ are identical or different alkyl groups having from 1 to 4 carbon atoms,
$R_4$ is a hydrogen atom or an alkyl group having from 1 to 4 carbon atoms, and
$\underline{n}$ is 2 or 3.

2. Fiber preparation systems containing a quaternized amine-amide condensation product as claimed in claim 1.

3. A process for the preparation of textile fibers, which comprises applying to the fibers a quaternized amine-amide condensation product as claimed in claim 1.

## Revendications

1. Produits de condensation amino-amides quaternisés, caractérisés en ce qu'on les obtient en condensant à 130—170°C pendant 2 à 6 heures, sans solvant, 1 mole d'une amine répondant à la formule générale:

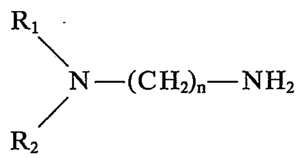

dans laquelle $R_1$ représente un radical alkyle ou alcényle contenant de 7 à 20 atomes de carbone, $R_2$ un radical alkyle contenant de 1 à 20 atomes de carbone ou un atome d'hydrogène et $\underline{n}$ le nombre 2 ou le nombre 3, avec de 0,8 à 1,3 mole d'un acide carboxylique répondant à la formule générale

$$R_4—COOH$$

dans laquelle $R_4$ représente un atome d'hydrogène ou un radical alkyle contenant de 1 à 4 atomes de carbone, puis on quaternise, en présence d'un hydroxyde de métal alcalin, avec un phosphate de trialkyle répondant à la formule générale:

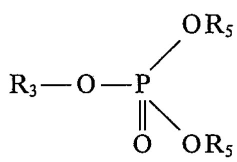

dans laquelle $R_3$ et $R_5$ représentent des radicaux alkyles en $C_1—C_4$ identiques ou différents.

2. Agent pour le traitement préparatoire de fibres, agent qui contient un produit de condensation amino-amide quaternisé selon la revendication 1.

3. Procédé pour le traitement préparatoire de fibres textiles, caractérisé en ce qu'on applique sur les fibres un produit de condensation amino-amide quaternisé selon la revendication 1.